# EUROPÄISCHE PATENTSCHRIFT

(11) **EP 4 414 888 B1**
(45) Veröffentlichungstag und Bekanntmachung des Hinweises auf die Patenterteilung: **12.11.2025**
(21) Anmeldenummer: 24154680.3
(22) Anmeldetag: 30.01.2024
(51) Int. Cl.: G06K 19/06

(54) **VERFAHREN ZUM DARSTELLEN EINES QR-CODES**
METHOD FOR REPRESENTING A QR CODE
PROCÉDÉ DE REPRÉSENTATION D'UN CODE QR

(30) Priorität: 07.02.2023 DE 102023102963
(43) Veröffentlichungstag der Anmeldung: 14.08.2024
(73) Patentinhaber: FM Marketing GmbH, 5202 Neumarkt am Wallersee (AT)
(72) Erfinder: Maier, Ferdinand, Schalkham 77, 5202 Neumarkt am Wallersee (AT)
(74) Vertreter: von Bülow & Tamada

(56) Entgegenhaltungen:
- DE-A1- 102014 118 329
- HUANG HSUAN-SHUO ET AL: "Exploring the Integrated Application of Aesthetic QR Code in Video", 202020 3RD IEEE INTERNATIONAL CONFERENCE ON KNOWLEDGE INNOVATION AND INVENTION (ICKII), IEEE, 21 August 2020 (2020-08-21), pages 152 - 155, XP033879470, DOI: 10.1109/ICKII50300.2020.9318853

## Beschreibung

Die vorliegende Erfindung betrifft ein Verfahren zum Darstellen eines QR-Codes sowie ein Systems zur Durchführung des Verfahrens.

QR-Codes sind aus der EP 0 672 994 A1 bekannt. QR-Codes bestehen aus einer quadratischen Matrix aus schwarzen und weißen Quadraten oder Punkten, Module genannt, die Daten binär darstellen. Eine spezielle Markierung in drei der vier Ecken des Quadrats gibt dabei die Orientierung eines QR-Codes vor.

Aus der DE 10 2014 118 329 A1 ist ein Verfahren zum Darstellen eines QR-Codes in einem aus einer Vielzahl von zeitlich aufeinander folgenden Einzelbildern zusammengesetzten Videos in einem der Einzelbilder bekannt.

Aus HUANG HSUAN-SHUO ET AL, "Exploring the Integrated Application of Aesthetic QR Code in Video", 202020 3RD IEEE INTERNATIONAL CONFERENCE ON KNOWLEDGE INNOVATION AND INVENTION (ICKII), IEEE, 21. August 2020, Seiten 152-155 ist die Integration eines ästhetischen QR-Codes in ein Video bekannt. Der QR-Code wird dabei in einem oder mehreren Einzelbildern des Videos eingebettet, sodass er visuell harmonisch bleibt. Durch eine spezielle Codierung und Fehlerkorrekturmechanismen wird sichergestellt, dass der QR-Code auch bei Verzerrungen lesbar bleibt. Zudem werden Techniken zur Überlagerung des QR-Codes in späteren Einzelbildern beschrieben, um eine bessere Wahrnehmbarkeit und Identifikation zu ermöglichen.

Es ist Aufgabe der Erfindung, das bekannte Verfahren zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung, umfasst ein Verfahren zum Darstellen eines QR-Codes in einem aus einer Vielzahl von zeitlich aufeinander folgenden Einzelbildern zusammengesetzten Video, das auf einem Fernsehgerät wiedergegeben wird und den QR-Code in wenigstens einem der Einzelbilder enthält, die Schritte:
- Aufnehmen des den QR-Code enthaltenden Einzelbildes aus dem Video ausgelöst durch einen Tastendruck auf einer das Fernsehgerät steuernden Fernbedienung;
- Ausschneiden einer Bildwiedergabe des QR-Codes aus dem Einzelbild; und
- Überlagern des Videos mit der ausgeschnittenen Bildwiedergabe des QR-Codes in auf das den QR-Code enthaltenden Einzelbild zeitlich folgenden Einzelbildern.

Dem angegebenen Verfahren liegt die Überlegung zugrunde, dass der Stand der Technik zwar Lösungen vorschlägt, Konsumenten auf ein zusätzliches Informationsangebot explizit aufmerksam zu machen, in dem auf sie entsprechend hingewiesen oder anderweitig Neugier geweckt wird. Problematisch ist allerdings, dass insbesondere in Videos, die im Rahmen von Fernsehsendungen des linearen Fernsehens übertragen werden, die Zeit für den Konsumenten nicht ausreicht, den QR-Code aufzunehmen, denn hierzu müsste er sich zunächst einen QR-Code-Scanner beschaffen, der in der Regel auf einem Mobiltelefon als Programm hinterlegt ist. Dann müsste er nah genug an sein Fernsehgerät herantreten, um den QR-Code zu scannen. In vielen Fällen wird der QR-Code zwischenzeitlich wieder ausgeblendet.

Hier greift die vorliegende Erfindung mit dem Vorschlag an, den Nutzer mit der ohnehin immer griffbereiten Fernbedienung eine Weisung zu senden, den QR-Code aus dem laufenden Video auszuschneiden und diesen dann mit der weiteren Wiedergabe des Videos zu überblenden. Auf diese Weise hat der Nutzer genug Zeit, kann sich der Benutzer selbst genug Zeit zum Aufnehmen des QR-Codes geben.

In einer Weiterbildung des angegebenen Verfahrens wird die ausgeschnittene Bildwiedergabe des QR-Codes vor der Überlagerung mit dem Video vergrößert. Auf diese Weise kann der Konsument bei Bedarf sitzen bleiben und den QR-Code aus der Distanz scannen. Dabei sollte die ausgeschnittene Bildwiedergabe des QR-Codes nach dem Vergrößern mindestens 25% der Größe des Einzelbildes besitzen.

In einer zusätzlichen Weiterbildung des angegebenen Verfahrens wird die ausgeschnittene Bildwiedergabe des QR-Codes an einer örtlichen Position im Video überlagert, an der sich der QR-Code im Einzelbild befindet. Auf diese Weise lässt sich vermeiden, dass die ausgeschnittene Bildwiedergabe des QR-Codes mit dem ursprünglich im Einzelbild enthaltenden QR-Code interferiert, sollte auch der QR-Code noch eine Zeit lang weiter angezeigt werden.

In einer weiteren Weiterbildung des angegebenen Verfahrens wird die Überlagerung des Videos mit der ausgeschnittenen Bildwiedergabe des QR-Codes basierend auf einem weiteren Tastendruck auf der Fernbedienung beendet. Auf diese Weise kann der Konsument selbst entscheiden, wann er die Überlagerung des Videos mit der ausgeschnittenen Bildwiedergabe des QR-Codes beendet und sie an seine persönliche Geschwindigkeit zum Scannen des QR-Codes anpassen.

In einer anderen Weiterbildung des angegebenen Verfahren wird zum Ausschneiden der Bildwiedergabe des QR-Codes aus dem Einzelbild der QR-Code mit einem Mustererkennungsverfahren, insbesondere dem Viola-Jones-Verfahren erkannt. Auf diese Weise kann der QR-Code neu gezeichnet werden, so dass bei der Vergrößerung Informationsverluste durch Unschärfe und dergleichen vermieden werden.

In einer noch anderen Weiterbildung des angegebenen Verfahrens wird die ausgeschnittene Bildwiedergabe des QR-Codes in einem Speicher hinterlegt und erst nach einem weiteren Tastendruck auf der Fernbedienung in auf das den QR-Code enthaltenden Einzelbild zeitlich folgenden Einzelbildern überlagert. Auf diese Weise kann der Konsument selbst entscheiden, wann er den QR-Code scannen möchte und sich gegebenfalls eine interessante Scene in dem Video zunächst zu Ende ansehen.

In einer bevorzugten Weiterbildung des angegebenen Verfahrens kann dabei eine einen Speicherzustand anzeigende Information bis zum weiteren Tastendruck auf dem Bildschirm angezeigt werden, um den Konsumenten daran zu erinnern, dass er bereits einen QR-Code aufgenommen, aber noch nicht gescannt hat. Dies reduzuiert auch das Risiko, dass der Konsument irrtümlich versucht, einen neuen QR-Code aufzunehmen, obwohl sich noch ein alter QR-Code im Speicher befindet.

In einer weiteren Weiterbildung des angegebenen Verfahrens wird die ausgeschnittene Bildwiedergabe des QR-Codes vor dem Überlagern mit dem Video mit einem Filter, vorzugsweise mit einem Farbreduktionsfilter, gefiltert, um den Informationsgehalt weiter zu steigern, sollte der QR-Code beispielsweise bei der Darstellung farblich ausgestaltet und daher schwieriger auszulesen sein. Als Farbreduktionsfilter sollte dabei bevorzugt ein Filter gewählt werden, der die Farben auf schwarz/weiß reduziert.

Gemäß einem weiteren Aspekt der Erfindung ist eine Steuervorrichtung eingerichtet, um eines der angegebenen Verfahren durchzuführen.

Erfindungsgemäß weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte des angegebenen Verfahrens durchzuführen, wenn das Computerprogramm auf einem elektronischen Gerät oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, das angegebene Verfahren durchführt.

Gemäß einem weiteren Aspekt der Erfindung umfasst ein System ein Fernsehgerät zum Darstellen eines Videos sowie zum Steuern des Fernsehgerätes eine Fernbedienung mit einer der angegebenen Steuervorrichtungen.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine schematische Darstellung eines Systems aus einem Fernsehgerät und einer Fernbedienung, und
Fig. 2 eine schematische Darstellung eines aus Einzelbildern zusammengesetzten Videos mit einem ersten zeitlichen Ablauf,
Fig. 3 eine schematische Darstellung eines aus Einzelbildern zusammengesetzten Videos mit einem zweiten zeitlichen Ablauf, und
Fig. 4 ein Strukturdiagramm eines Systems zur Ausführung eines Verfahrens zum Abbilden eines QR-Codes aus dem Video.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

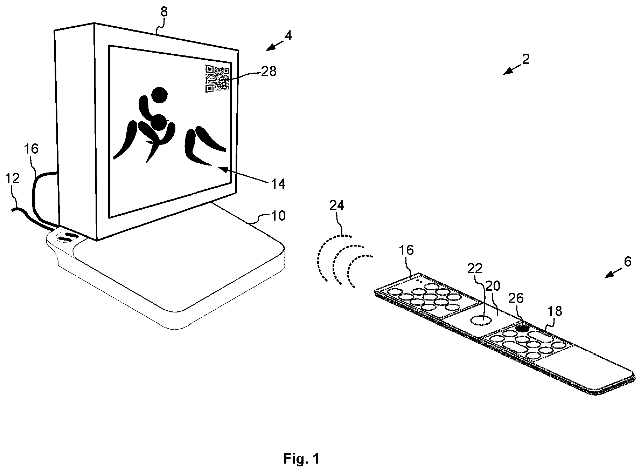

Es wird auf Fig. 1 Bezug genommen, die eine schematische Darstellung eines Systems 2 aus einem Fernsehgerät 4 und einer Fernbedienung 6 zeigt.

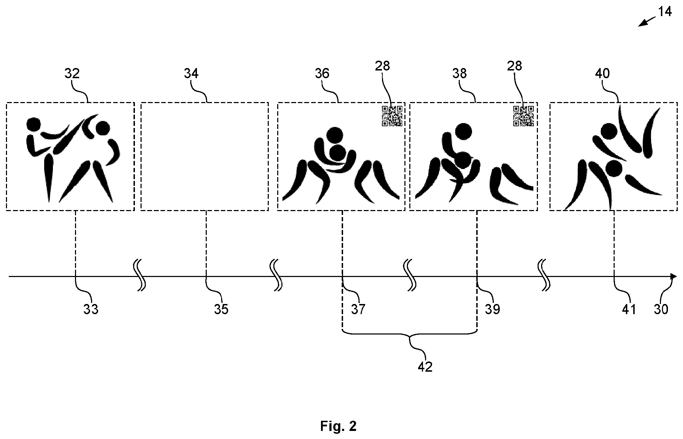

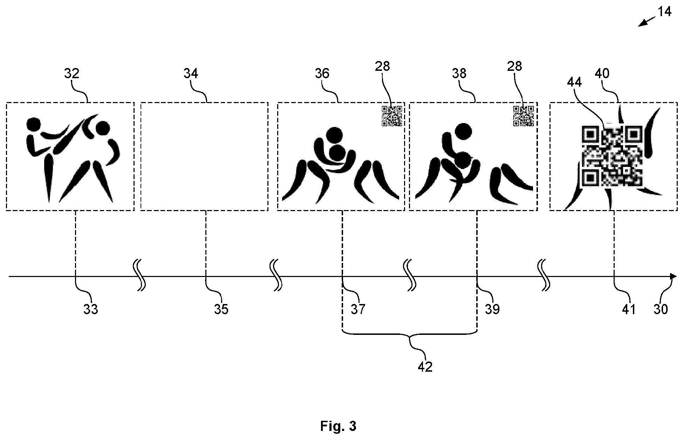

Das Fernsehgerät 4 umfasst einen Bildschirm 8, an den eine Set-Top-Box 10 angeschlossen ist. Die Set-Top-Box 10 empfängt über ein Antennenkabel 12 ein Antennensignal, in dem ein in den Figs. 2 und 3 später näher zu erläuterndes Video 14 enthalten ist. Die Set-Top-Box 10 filtert das Video 14 aus dem Antennensignal und gibt über ein Bildschirmkabel 16 ein das Video 14 tragende Videosignal an den Bildschirm 5 aus, um das Video 14 auf dem Bildschirm 8 wiederzugeben.

Bevor auf das Video 14 näher eingegangen wird, soll zunächst auf die Steuerung des Fernsehgerätes 4 mit der Fernbedienung 6 eingegangen werden.

Die Fernbedienung 4 umfasst ein erstes Tastenfeld 16 und ein zweites Tastenfeld 18, die über ein Steuerkreuz 20 voneinander getrennt sind. Mittig im Steuerkreuz 20 befindet sich eine Bestätigungstaste 22. Dieser Aufbau ist grundsätzlich bekannt und braucht nicht weiter erläutert zu werden. Die Tasten der Tastenfelder 16, 18 sowie das Steuerkreuz 20 und die Bestätigungstaste 22 werden zur Eingabe von Steuerbefehlen eingesetzt, um die Funktion des Fernsehgeräts 4 zu steuern. Hierzu werden die Eingaben in einem Übertragungssignal 24 an die Set-Top-Box 10 gesendet, die die Eingaben aus dem Übertragungssignal 24 filtert und dann zu den Eingaben entsprechende Funktionen auf dem Fernsehgerät 4, wie Lautstärkesteuerung, Programmwahl und dergleichen durchführt.

Eine besondere Taste auf der Fernbedienung, die in Fig. 1 schraffiert und mit dem Bezugszeichen 26 versehen ist, wird für eine besondere Funktion auf dem Fernsehgerät 4 verwendet. Hierbei handelt es sich um eine Hilfe für einen Zuschauer oder Konsumenten des Videos 14, die diesem ausreichend Zeit gibt, einen in dem Video 14 dargestellten QR-Code 28 zu scannen.

Die Überlegung dieser Funktion soll zunächst anhand Fig. 2 näher erläutert werden, die schematisch einen Ablauf des Videos 14 über die Zeit 30 zeigt.

Video setzt sich aus einer Abfolge von Einzelbildern zusammen. Von diesen Einzelbildern ist in Fig. 2 ein erstes Einzelbild 32 zu einem ersten Zeitpunkt 33, ein zweites Einzelbild 34 zu einem zweiten Zeitpunkt 35, ein drittes Einzelbild 36 zu einem dritten Zeitpunkt 37, ein viertes Zeitpunkt 38 zu einem vierten Zeitpunkt 39 und ein fünftes Einzelbild 40 zu einem fünften Zeitpunkt 41 gezeigt. Zwischen dem dritten Zeitpunkt 37 und dem vierten Zeitpunkt 39 ist in dem Video 14 der QR-Code 28 abgebildet.

Je nach dem, wie groß ein Zeitraum 42 zwischen dem dritten Zeitpunkt 37 und dem vierten Zeitpunkt 39 ist, desto mehr oder weniger Zeit bleibt dem Zuschauer, den QR-Code 28 zu scannen und die in ihm getragene Information zu lesen. Schafft er es in diesem Zeitraum 42 nicht, den QR-Code 28 zu scannen, dann hat er insbesondere im linearen Fernsehen nicht die Möglichkeit, das Scannen nachzuholen.

Eine Möglichkeit, dem Zuschauer diese Möglichkeit zu geben wird nachstehend anhand von Fig. 2 erläutert.

Hierzu löst der Zuschauer durch Druck auf die besondere Taste 26 eine Erkennung des QR-Code 28 beispielsweise im vierten Einzelbild 38 aus. Der erkannte QR-Code 28 wird aus dem vierten Einzelbild 38 ausgeschnitten. Danach wird der ausgeschnittene QR-Code 44 als Bild in dem Video 14 überlagert, so dass der Zuschauer nun mehr Zeit hat, beispielsweise sein Smartphone zu holen und diesen zu scannen.

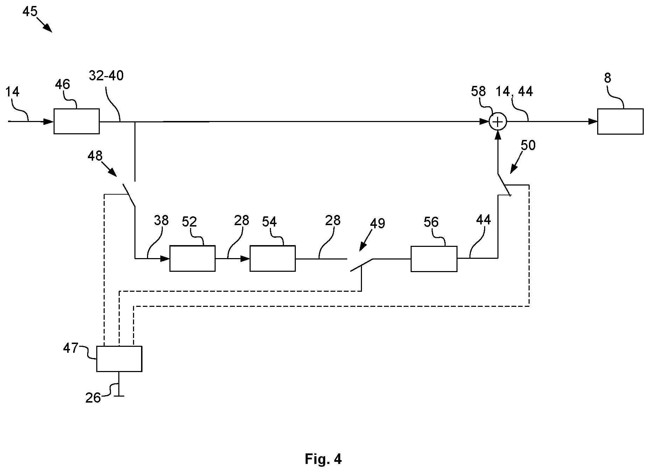

Dieses Vorgehen wird nachstehend anhand Fig. 4 erläutert, die ein Strukturdiagramm eines beispielhaften Systems 45 zeigt, welches das zuvor erläuterte Verfahren ausführt.

Zunächst wird das Video 14 aus dem Antennensignal an einer Dekodiereinrichtung 46 empfangen, die das Video 14 in die zeitlich aufeinander folgenden Einzelbilder 32 bis 40 zerlegt. Diese Bilder werden dann am Bildschirm 8 ausgegeben.

Das System 45 umfasst einen Demultiplexer 47, der das Tastensignal der besonderen Taste 26 nacheinander auf einen ersten schließenden Schalter 48, einen zweiten schließenden Schalter 49 und einen öffnenden Schalter 50 weiterleitet.

Auf einen ersten Druck der besonderen Taste 26 hin schließt der erste schließende Schalter 48 und das zu dieser Zeit 30 angezeigte Einzelbild, hier das Einzelbild 38, wird von einer Mustererkennungseinrichtung 52 erfasst. Die Mustererkennungseinrichtung 52 erkennt aus dem Einzelbild 38 den darin enthaltenen QR-Code 28 und hinterlegt ihn in einem Speicher 54. Zur Erkennung des QR-Codes 28 kann jedes geeignete Mustererkennungsverfahren zum Einsatz kommen, wie beispielsweise das sogenannte Viola-Jones-Verfahren, welches im Aufsatz *"*Rapid Object Detection using a Boosted Cascade of Simple Features" von Paul Viola und Michael Jones in Accepted Converence On Computer Vision and Pattern Recognition, 2001 veröffentlicht ist.

Auf einen zweiten Druck der besonderen Taste 26 hin schließt sich der zweite schließende Schalter 49, worauf hin der QR-Code 28 aus dem Speicher 54 abgerufen und in eine Vergrößerungseinrichtung 56 geladen wird. Diese vergrößert den QR-Code 28 und gibt den vergrößerten QR-Code 44 an eine Überlagerungseinrichtung 58 aus, die den vergrößerten QR-Code 44 dann mit den Einzelbildern 32 bis 40 aus dem Video 14 überlagert. In der Folge sieht der Zuschauer das Video 14 in der Form wie es im Einzelbild 40 der Fig. 3 abgebildet ist.

Auf einen dritten Druck der besonderen Taste 26 hin öffnet sich der öffnende Schalter 50 und unterbricht die Ausgabe des vergrößerten QR-Codes 44. Der Zuschauer sieht das Video 14 nun wieder ohne eine Überlagerung, auch Überblendung genannt.

## Patentansprüche

1. Verfahren zum Darstellen eines QR-Codes (28) in einem aus einer Vielzahl von zeitlich aufeinander folgenden Einzelbildern (32-40) zusammengesetzten Video (14), das auf einem Fernsehgerät (2) wiedergegeben wird und den QR-Code (28) in wenigstens einem der Einzelbilder (38) enthält, umfassend:
- Aufnehmen (46) des den QR-Code (28) enthaltenden Einzelbildes (38) aus dem Video (14) ausgelöst durch einen Druck (48) einer Taste (26) auf einer das Fernsehgerät (2) steuernden Fernbedienung (4);
- Ausschneiden (52) einer Bildwiedergabe des QR-Codes (28) aus dem Einzelbild (38); und
- Überlagern (58) des Videos (14) mit der ausgeschnittenen Bildwiedergabe (44) des QR-Codes (28) in auf das den QR-Code (28) enthaltenden Einzelbild (38) zeitlich folgenden Einzelbildern (40).

2. Verfahren nach Anspruch 1, wobei die ausgeschnittene Bildwiedergabe (44) des QR-Codes (28) vor der Überlagerung (56) mit dem Video vergrößert (56) wird.

3. Verfahren nach einem der vorstehenden Ansprüche, wobei die ausgeschnittene Bildwiedergabe (44) des QR-Codes (28) an einer örtlichen Position im Video (14) überlagert wird, an der sich der QR-Code (28) im Einzelbild (38) befindet.

4. Verfahren nach einem der vorstehenden Ansprüche, umfassend:
- Beenden (50) der Überlagerung (58) des Videos (14) mit der ausgeschnittenen Bildwiedergabe (44) des QR-Codes (28) basierend auf einem weiteren Druck (50) einer Taste (26) auf der Fernbedienung (4).

5. Verfahren nach einem der vorstehenden Ansprüche, wobei zum Ausschneiden (52) der Bildwiedergabe (44) des QR-Codes (28) aus dem Einzelbild (38) der QR-Code (28) mit einem Mustererkennungsverfahren, insbesondere dem Viola-Jones-Verfahren erkannt wird.

6. Verfahren nach einem der vorstehenden Ansprüche, wobei die ausgeschnittene Bildwiedergabe (44) des QR-Codes (28) in einem Speicher (54) hinterlegt und erst nach einem weiteren Druck (49) einer Taste (26) auf der Fernbedienung (4) in auf das den QR-Code (28) enthaltenden Einzelbild (38) zeitlich folgenden Einzelbildern (32-40) überlagert wird.

7. Verfahren nach Anspruch 6, umfassend:
- Anzeigen einer einen Speicherzustand anzeigenden Information bis zum weiteren Tastendruck auf dem Bildschirm.

8. Verfahren nach einem der vorstehenden Ansprüche, wobei die ausgeschnittene Bildwiedergabe (44) des QR-Codes (28) vor dem Überlagern (58) mit dem Video (14) mit einem Filter, vorzugsweise mit einem Farbreduktionsfilter, gefiltert wird.

9. Steuervorrichtung umfassend einen Speicher und einen Prozessor, wobei ein Verfahren nach einem der vorstehenden Ansprüche in Form eines Computerprogramms in dem Speicher hinterlegt und der Prozessor zur Ausführung des Verfahrens vorgesehen, wenn das Computerprogramm aus dem Speicher in den Prozessor geladen ist.

10. System (45) mit einem Fernsehgerät (2) zum Darstellen eines Videos (14) und einer eine Steuervorrichtung nach Anspruch 9 umfassenden Fernbedienung (4) zum Steuern des Fernsehgerätes (2).

## Claims

1. Method for displaying a QR code (28) in a video (14) composed of a plurality of temporally successive single images (32-40), which is reproduced on a television set (2) and contains the QR code (28) in at least one of the single images (38), comprising:
- capturing (46) the single image (38) containing the QR code (28) from the video (14) triggered by a press (48) of a key (26) on a remote control (4) controlling the television set (2);
- cutting out (52) a reproduction of the QR code (28) from the single image (38); and
- superimposing (58) the video (14) with the cut-out reproduction (44) of the QR code (28) in single images (40) temporally following the single image (38) containing the QR code (28).

2. Method according to claim 1, wherein the cut-out reproduction (44) of the QR code (28) is enlarged (56) before the superimposition (56) with the video.

3. Method according to one of the preceding claims, wherein the cut-out reproduction (44) of the QR code (28) is superimposed at a local position in the video (14) at which the QR code (28) is located in the single image (38).

4. Method according to one of the preceding claims, comprising:
- ending (50) the superimposition (58) of the video (14) with the cut-out reproduction (44) of the QR code (28) based on a further press (50) of a key (26) on the remote control (4).

5. Method according to one of the preceding claims, wherein for cutting out (52) the reproduction (44) of the QR code (28) from the single image (38) the QR code (28) is recognized with a pattern recognition method, in particular the Viola-Jones method.

6. Method according to one of the preceding claims, wherein the cut-out reproduction (44) of the QR code (28) is stored in a memory (54) and only after a further press (49) of a key (26) on the remote control (4) is it superimposed in single images (32-40) temporally following the single image (38) containing the QR code (28).

7. Method according to claim 6, comprising:
- displaying information indicating a memory state on the screen until the next key press.

8. Method according to one of the preceding claims, wherein the cut-out reproduction (44) of the QR code (28) is filtered with a filter, preferably with a color reduction filter, before superimposing (58) with the video (14).

9. Control device comprising a memory and a processor, wherein a method according to one of the preceding claims is stored in the form of a computer program in the memory and the processor is provided for executing the method when the computer program is loaded from the memory into the processor.

10. System (45) with a television set (2) for displaying a video (14) and a remote control (4) comprising a control device according to claim 9 for controlling the television set (2).

## Revendications

1. Procédé pour afficher un code QR (28) dans une vidéo (14) composée d'une pluralité d'images successives dans le temps (32-40), qui est reproduite sur un téléviseur (2) et contient le code QR (28) dans au moins une des images (38), comprenant :
- la capture (46) de l'image (38) contenant le code QR (28) à partir de la vidéo (14) déclenchée par une pression (48) d'une touche (26) sur une télécommande (4) commandant le téléviseur (2) ;
- la découpe (52) d'une reproduction du code QR (28) à partir de l'image (38) ; et
- la superposition (58) de la vidéo (14) avec la reproduction découpée (44) du code QR (28) dans des images (40) suivant dans le temps l'image (38) contenant le code QR (28).

2. Procédé selon la revendication 1, dans lequel la reproduction découpée (44) du code QR (28) est agrandie (56) avant la superposition (56) avec la vidéo.

3. Procédé selon l'une des revendications précédentes, dans lequel la reproduction découpée (44) du code QR (28) est superposée à une position locale dans la vidéo (14) à laquelle le code QR (28) est situé dans l'image (38).

4. Procédé selon l'une des revendications précédentes, comprenant :
- l'arrêt (50) de la superposition (58) de la vidéo (14) avec la reproduction découpée (44) du code QR (28) basé sur une autre pression (50) d'une touche (26) sur la télécommande (4).

5. Procédé selon l'une des revendications précédentes, dans lequel, pour découper (52) la reproduction (44) du code QR (28) à partir de l'image (38), le code QR (28) est reconnu avec une méthode de reconnaissance de formes, en particulier la méthode de Viola-Jones.

6. Procédé selon l'une des revendications précédentes, dans lequel la reproduction découpée (44) du code QR (28) est stockée dans une mémoire (54) et seulement après une autre pression (49) d'une touche (26) sur la télécommande (4) est superposée dans des images (32-40) suivant dans le temps l'image (38) contenant le code QR (28).

7. Procédé selon la revendication 6, comprenant :
- l'affichage d'une information indiquant un état de mémoire sur l'écran jusqu'à la prochaine pression d'une touche.

8. Procédé selon l'une des revendications précédentes, dans lequel la reproduction découpée (44) du code QR (28) est filtrée avec un filtre, de préférence avec un filtre de réduction de couleur, avant la superposition (58) avec la vidéo (14).

9. Dispositif de commande comprenant une mémoire et un processeur, dans lequel un procédé selon l'une des revendications précédentes est stocké sous la forme d'un programme informatique dans la mémoire et le processeur est prévu pour exécuter le procédé lorsque le programme informatique est chargé de la mémoire dans le processeur.

10. Système (45) comprenant un téléviseur (2) pour afficher une vidéo (14) et une télécommande (4) comprenant un dispositif de commande selon la revendication 9 pour commander le téléviseur (2).
